# EUROPEAN PATENT APPLICATION

(11) **EP 1 624 202 A2**
(43) Date of publication of application: **08.02.2006**
(21) Application number: 05254430.1
(22) Date of filing: 15.07.2005
(51) Int. Cl.: F16B 37/06, F16B 33/00, B60K 15/00

(54) **Rivetless nut plate**

(30) Priority: 03.08.2004 US 598580 P
(71) Applicant: TEXTRON, INC., Providence, Rhode Islands 02903 (US)
(72) Inventor: Cohen, Scott, Corona Ca 92881 (US); Eshraghi, Soheil, Irvine CA 92604 (US)
(74) Representative: Mackenzie, Andrew Bryan

(57) **Abstract**

A sealed rivetless nut plate (10) which includes a retainer (30), a nut (32) and a gasket (22), all retained in a shroud (12). The nut (32) includes a threaded throughbore (38) for threadably receiving a fastener as well as either holes or slots (42, 44) which receive corresponding protrusions or dimples (46) on the retainer (30). Alternatively, the nut (32) can include protrusions or dimples with the retainer (30) providing corresponding holes or slots. Regardless, this feature is configured to provide a specific amount of x-axis and y-axis floatation. The shroud (12) has a rolled end (20) which keeps the assembly intact. The shroud (12) allows only a nominal amount of movement of the nut (32) in the vertical axis. Before installation, a mandrel (58) is engaged in the assembly. During installation, the mandrel (58) is pulled out, causing a tubular portion (52) of the retainer (30) to expand, against a workpiece, thereby securing the sealed rivetless nut plate (10) in position.

## Description

### Related Application (Priority Claim)

This application claims the benefit of U.S. Provisional Application Serial No. 60/598,580, filed August 3, 2004, which is hereby incorporated herein by reference in its entirety.

### Background

This invention generally relates to nut plate designs, and more specifically relates to a sealed rivetless nut plate. Sealed rivetless nut plates are used in conjunction with liquid containing vessels such as aircraft fuel tanks.

Fasteners used in association with fluid tanks, such as fuel tanks or water tanks, for aircraft or the like present a problem in preventing leakage through the openings for the fasteners. Fasteners used in such installations may include a nut plate and a nut which are part of an assembly. There are many different design configurations of nut plates being used today. Two major classes are riveted nut plates and rivetless nut plates.

In riveted nut plates, two rivets are employed for attaching the body of the nut plate to the workpiece. To eliminate the potential for leakage, sealant is used between the structure and the nut plate.

Rivetless nut plates are composed fundamentally of five main components: a nut element, a holding bracket or retainer, an attachment sleeve, a shroud and a gasket which may be formed integral with the retainer. However, some rivetless nut plate designs consist of excessive components with regard to their overall assembly and function. For example, some designs incorporate an additional component to allow for the nut to float, while disallowing over-rotation or lifting. Furthermore, some rivetless nut plate designs require expensive manufacturing processes and/or require complicated assembly methods, due to their non-uniform shape or configuration.

The method of attachment and fixing of these prior art nut plates to workpieces is based on two major features:
(1) The insertion of the retainer sleeve into an aperture of a workpiece by pressing in or pulling down the bracket assembly into the aperture of the workpiece. Serration/lobe features on the sleeve engage, and may be embedded with the walls of the workpiece to provide resistance against the rotation of the nut plate, upon engagement thereof by an externally threaded member.
(2) After insertion of the retainer sleeve into the aperture of the workpiece, an end of the sleeve may be flared against the opposite side of the workpiece providing resistance against push-out forces that are encountered during usage of the nut plate. In certain prior art designs, the sleeve is also expanded after insertion to engage the walls of the aperture and enhance the engagement thereof. Therefore, the end of the sleeve may be flared over to engage the opposite side wall of the workpiece.

The installation of rivetless nut plates with tooling of present design is cumbersome, slow, complicated, costly and often non-functional. Also, the hole preparation needs to be precise and may require countersinking or counterboring for flush installation. These shortcomings have limited the usage of rivetless nut plates.

The flaring of rivetless nut plates to engage the underside of the workpiece is also disadvantageous for many reasons, such as requiring complicated tooling, special aperture preparation (such as counter-bore and counter-sink) to achieve flush installation, grip length limitations, the creation of gaps between the sleeve and the walls of the workpiece, and longer length, thus making the rivetless nut plate a relatively heavy component.

Rivetless nut plate designs are in the prior art. Some designs rely on adhesive for attaching the nut plate to the structure, while other designs do not have adhesives or lobes which are used to fix the nut plate within the structure. Instead of relying on adhesive, these other designs rely on heavily cold-worked holes and high interference engagement utilizing a hardened pin as the installation tool to expand the sleeve element into engagement with the workpiece structure. The sleeve is smooth and because of high level expansion, the friction forces created are intended to retain the nut plate and provide expected mechanical properties. A fundamental purpose for these designs is to enhance mechanical fatigue properties of the joint. Generally, the parts for these designs are very expensive, installation is costly and cumbersome, and hole preparation needs to be very precise. Thus, generally the overall cost of these designs is very high and application is thereby limited. There are also reports in the field that because of the required heavy expansion, the receiving structure can deform beyond acceptable limits, thereby causing damage and rejection of the hole structure.

Thus, there is a need for a rivetless nut plate design which overcomes the disadvantages of the prior art rivetless nut plate designs. The present invention provides for such a rivetless nut plate design and further includes sealed assembly of the general type and kind shown in United States Patent No. 4,227,561 mentioned above.

### Objects and Summary

An object of an embodiment of the present invention is provide a sealed rivetless nut plate which is fabricated with a minimum number of components.

Another object of an embodiment of the present invention is provide a sealed rivetless nut plate which includes a shroud which is configured to avoid a push-out failure, maintain the sub-assembly of parts, and enhance the sealing effect.

Still another object of an embodiment of the present invention is provide a sealed rivetless nut plate which can be assembled quickly and easily.

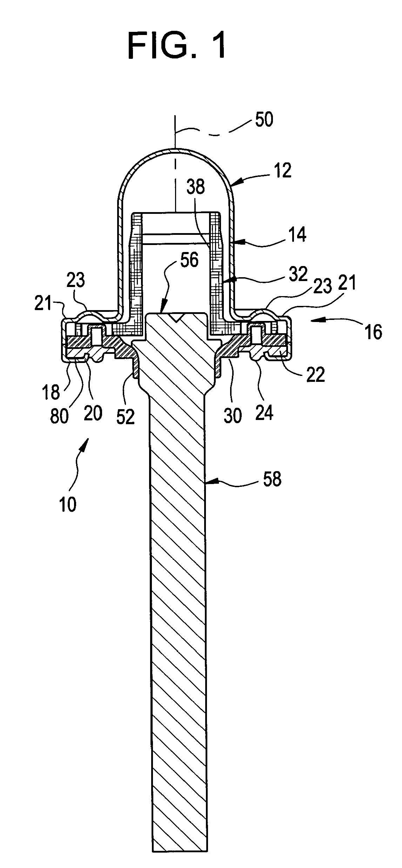

Briefly, and in accordance with at least one of the foregoing objects, an embodiment of the present invention provides a sealed rivetless nut plate which includes a retainer, a nut member and a gasket, all of which are generally retained in a sub-assembled orientation by a shroud. The nut includes a threaded throughbore for threadably receiving a fastener as well as a base portion which includes either oversized holes or slots which receive corresponding protrusions or extruded dimples on the retainer to provide a degree of motion for the nut to facilitate engagement and alignment with the male threaded member. Alternatively, the base portion of the nut can include protrusions or extruded dimples with the retainer providing corresponding holes or slots. Regardless, this feature is configured to provide a specific amount of x-axis and y-axis floatation (industry standard float for a nut plate is 0.030 inches (0.015 inches radially). The shroud overlies the sub-assembly of the nut, the retainer and the gasket, and is folded under the retainer, thereby keeping the assembly intact. Preferably, the shroud is configured to allow a nominal amount of controlled movement of the nut in the vertical axis, but does not compromise functionality. The gasket may be a separate component or may be molded on or attached to the underside of the retainer. Prior to the assembly of the shroud to the retainer and nut sub-assembly, a stem or mandrel for expanding the retainer sleeve upon installation is positioned between the nut and retainer sub-assembly, as shown in Figure 1. Thereafter, the shroud is placed over the sub-assembly and is folded under the retainer and gasket to maintain the overall assembly of the components prior to installation. During installation to a workpiece, the sub-assembly is positioned under an aperture in a workpiece. Next, the stem or mandrel is pulled out of the nut plate assembly, causing the tubular sleeve portion of the retainer to expand, against a workpiece aperture wall, thereby securing the sealed rivetless nut plate in position, with the sealing portion of the gasket component engaged with the adjacent surface of the workpiece. As such, the gasket and shroud seal the resulting joint against leakage.

### Brief Description of the Drawings

The organization and manner of the structure and operation of the invention, together with further objects and advantages thereof, may best be understood by reference to the following description, taken in connection with the accompanying drawings, wherein like reference numerals identify like elements in which:
Figure 1 is a cross-sectional view of a sealed rivetless nut plate assembly which is in accordance with an embodiment of the present invention, prior to installation;
Figure 2 is an exploded perspective view of the sealed rivetless nut plate illustrated in Figure 1;
Figure 3 is a top perspective view of a retainer component of the sealed rivetless nut plate illustrated in Figures 1 and 2;
Figure 4 is a bottom perspective view of the retainer illustrated in Figure 3;
Figure 5 is a view similar to Figure 3, but also showing a nut and the relationship between protrusions or extruded dimples on the retainer and corresponding oversized holes in a base portion of the nut;
Figure 6 is a view similar to Figure 1, but showing the sealed rivetless nut plate installed in a workpiece, as a result of a mandrel having been pulled out to expand the retainer sleeve;
Figure 7 is a top perspective view of a nut which can be used as an alternative to the nut which is shown in Figure 5;
Figure 8 is a bottom, perspective view of a gasket component of the sealed rivetless nut plate illustrated in Figures 1 and 2;
Figure 9 is a top view of the gasket shown in Figure 8; and
Figure 10 is a cross-sectional view of the gasket shown in Figures 8 and 9, taken along line 10-10 of Figure 9.

### Description

While the present invention may be susceptible to embodiment in different forms, there are shown in the drawings, and herein will be described in detail, embodiments thereof with the understanding that the present description is to be considered an exemplification of the principles of the invention and is not intended to limit the invention to that as illustrated and described herein.

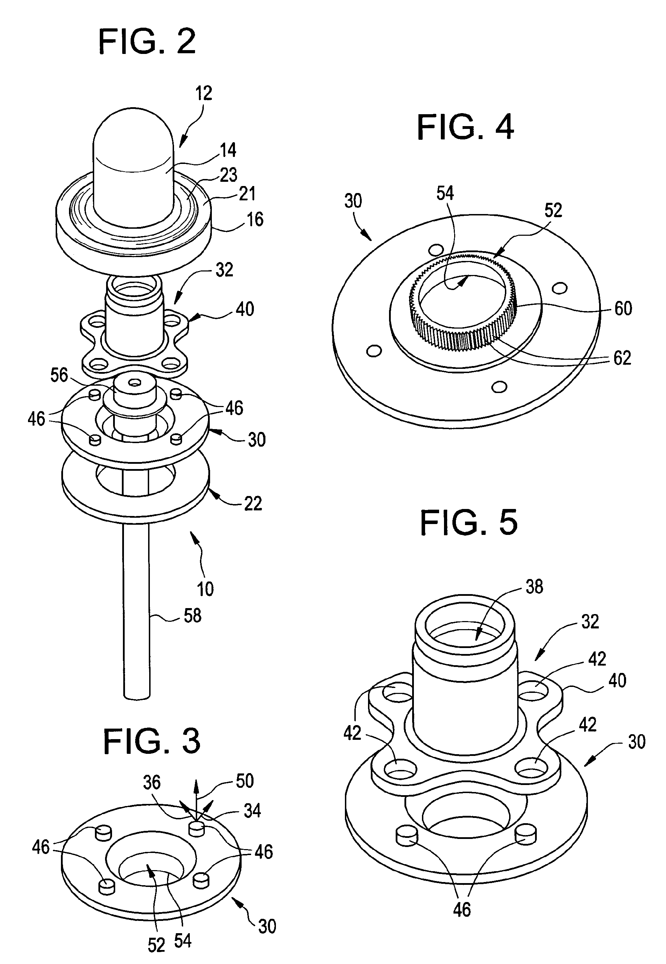

Figures 1 and 2 illustrate a sealed rivetless nut plate 10 which is in accordance with an embodiment of the present invention. The sealed rivetless nut plate 10 includes a minimum number of components, and can be assembled quickly and easily.

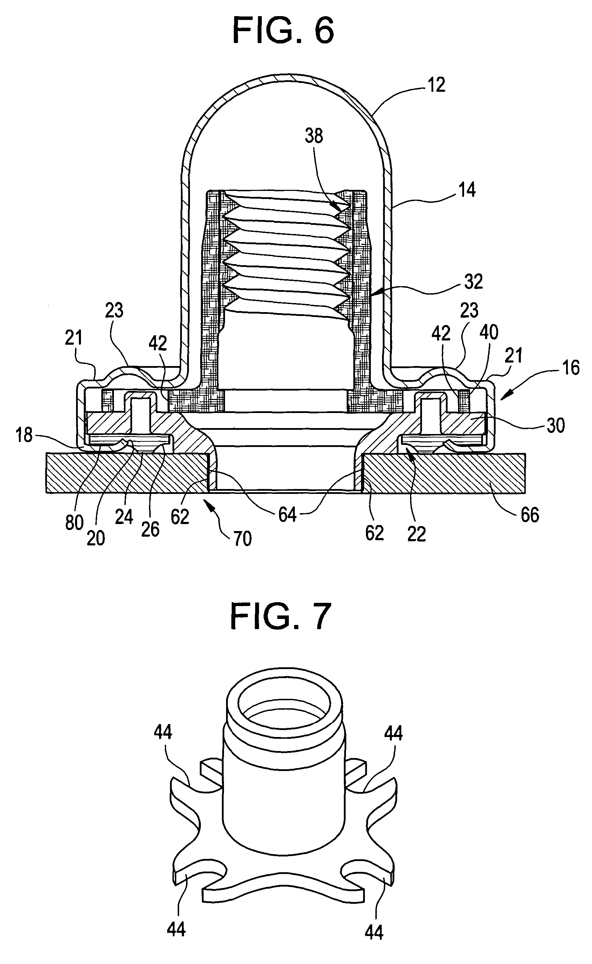

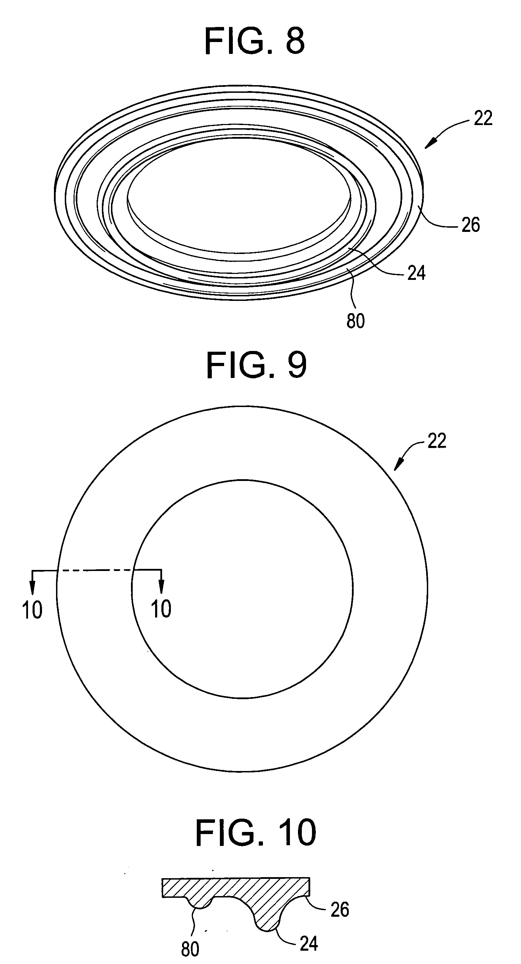

Furthermore, the sealed rivetless nut plate 10 includes a shroud 12 which is configured to avoid a push-out failure and enhance the sealing function. The shroud 12 has a dome portion 14 as well as a base portion 16. The base portion 16 has a rolled end which includes a lip 18 at its end 20, and the lip 18 is rolled against a gasket 22. Additionally, a surface 21 of the base portion 16 of the shroud 12 includes a circumferential rib 23 which stabilizes the shroud 12 and provides greater push out resistance of the nut 32. Preferably, the shroud 12 is stamped from stainless steel and the gasket 22 is made of rubber. A preferred form of the gasket 22 is shown in Figures 8-10. As shown, preferably the gasket 22 is circular, having sealing lips or ridges 24 and 80 on its bottom surface 26. As shown in Figure 6, while sealing lip 80 is pressed fully down after installation, preferably the other sealing lip 24 extends axially beyond the lip 18 of the shroud 12.

The fact that the lip 18 of the shroud 12 is rolled against the gasket 22 provides that the shroud 12 generally keeps the overall assembly 10 together, and keeps the shroud 12 from being pushed away from the retainer 30 and the nut 32. Preferably, the gasket 22 is molded to the underside of the retainer 30. Alternatively, the gasket 22 may be provided as being a separate component, not molded to the retainer 30, or may be fixed to the retainer 30 by an adhesive or some other form of attachment.

In addition to a shroud 12 and a gasket 22, the sealed rivetless nut plate 10 includes a retainer 30 and a nut 32 which engage each other to provide that the nut 32 can float a pre-determined amount, such as 0.030 inches, in the direction of the x-axis 34 and y-axis 36 (see Figure 3). To this end, the nut 32 not only includes a threaded throughbore 38 for threadably receiving an externally threaded fastener, but also a base portion 40 which includes openings such as in the form of either holes 42 (see Figure 5) or slots 44 (see Figure 7) which receive corresponding protrusions or extruded dimples 46 on the retainer 30 (see Figures 1, 2, 3, 5 and 6). While the drawings show the retainer 30 having four protrusions or extruded dimples 46, and the nut 32 having four corresponding holes 42 or slots 44, a different number than four can be provided. Alternatively, the base portion 40 of the nut 32 can include protrusions or extruded dimples with the retainer 30 providing corresponding holes or slots. The holes 42 or slots 44 are oversized with respect to the protrusions or dimples 46 to provide for the desired movement in the x-y direction, required to permit alignment with and engagement by the male threaded fastener (not shown). However, providing that the retainer 30 has the protrusions or extruded dimples 46 provides an additional boundary against fluid leaking if the gasket 22 were to fail. Regardless, this feature (i.e., the engagement between the retainer 30 and the nut 32) is configured regarding the oversized slots and openings to provide a specific amount of x-axis and y-axis floatation of the nut 32. The shroud 12 allows the nut 32 to move a nominal amount in the vertical axis 50 (see Figures 1 and 3), thereby allowing for a consistent assembly while still allowing floatation of the nut 32. Additionally, as discussed above, the shroud 12 is configured (i.e., via its lip 18) to prevent the shroud 12 from being pushed away from the retainer 30 and the nut 32.

The retainer 30 includes a tubular portion or sleeve 52 which provides a central aperture 54 for allowing a fastener to extend through the retainer 30 and engage the internally threaded throughbore 38 of the nut 32. As shown in Figure 1, the central aperture 54 is shaped such that it is undersized with regard to the head 56 of a mandrel 58 which is initially engaged in the retainer 30. As shown most clearly in Figure 4, preferably an external surface 60 of the tubular portion 52 of the retainer 30 includes lobes or ribs 62.

During installation, the mandrel 58 is pulled out, causing the tubular portion 52 of the retainer 30 to deform and expand radially outwardly, such that the lobes or ribs 62 become embedded into the wall 64 of the workpiece 66 (see Figure 6). This installation process is described in patent application serial no. 10/272,721, filed October 17, 2001 (Publication No. US 2003/0091408 A1), which is hereby incorporated by reference in its entirety.

As discussed above, the base portion 40 of the nut 32 preferably includes either oversized holes 42 (as shown in Figure 5) or oversized slots 44 (as shown in Figure 7) which receive corresponding studs, protrusions or extruded dimples 46 on the retainer 30 (see Figures 1, 2, 3, 5 and 6). This feature provides a pre-determined amount of x-axis and y-axis floatation of the nut 32. As an alternative to providing that the nut 32 includes either holes 42 or slots 44 which receive corresponding protrusions or extruded dimples 46 on the retainer 30, the base portion 40 of the nut 32 can be provided as including protrusions or extruded dimples which engage corresponding holes or slots on the retainer 30.

As discussed above, preferably the shroud 12 is stamped from stainless steel. Preferably, the nut 32 and retainer 30 are also stamped from stainless steel. The mandrel 58 which is discarded upon installation may be formed of conventional metal, such as steel or stainless steel.

To assemble the sealed rivetless nut plate 10, the retainer 30 and nut 32 are aligned with each other (i.e., relative to the extruded dimples or protrusions 46 and the holes 42 or slots 44) and pre-assembled. During assembly, it is irrelevant what orientation is used between the nut 32 and retainer 30, as the entire design is symmetrical. With the design being round, directional issues while assembling the sealed rivetless nut plate 10 into its application are also nonexistent. At this point the mandrel 58 is also placed in its desired orientation.

During this pre-assembly operation, the gasket 22 is also placed in its proper orientation, with the head 56 of the mandrel 58 in place in aperture 54 in the retainer 30. The shroud 12 is engaged over the sub-assembly and the lip 18 of the shroud 12 is rolled against the gasket 22 to provide a seal, and thereby securing the overall assembly 10 together. As an alternative approach, the various components may be assembled within the shroud 12, with rolling of lip 18 being the last step in the assembly. Subsequently, in the field, the sealed rivetless nut plate 10 (with mandrel 58) is inserted in an aperture 70 in a workpiece 66, and the mandrel 58 is pulled out to expand the sleeve 52, causing the lobes or ribs 62 on the tubular sleeve portion 52 of the retainer 30 to become embedded into the wall 64 of the workpiece 66 (see Figure 6). The overall assembly is then installed to the workpiece 66 and is ready for a subsequent mounting operation regarding the externally threaded fastener discussed above.

The rivetless nut plate 10 described hereinabove which is in accordance with an embodiment of the present invention provides excellent sealing properties in addition to providing for flotation of the nut 32. The rivetless nut plate 10 provides excellent sealing properties due to such structures as the sealing lips 24 and 80 on the gasket 22, and the circumferential rib 23 which is provided on the base portion 16 of the shroud 12.

While embodiments of the present invention are shown and described, it is envisioned that those skilled in the art may devise various modifications of the present invention without departing from the spirit and scope of the disclosure.

## Claims

1. A rivetless nut plate (10) **characterized by**: a shroud (12); a retainer (30) disposed in the shroud (12); and a nut member (32) disposed in the shroud (12) and having a threaded throughbore (38) for threadably receiving a fastener, wherein either the nut member (32) or the retainer (30) has openings (42, 44) formed therein, wherein either the nut member (32) or the retainer (30) has protrusions (46) thereon, wherein the protrusions (46) are received in the openings (42, 44) and provide a degree of motion for the nut number (32) to facilitate engagement and alignment with the fastener.

2. A rivetless nut plate (10) as recited in claim 1, **characterized in that** the nut member (32) has openings (42, 44) formed therein, and the retainer (30) has protrusions (46) thereon.

3. A rivetless nut plate (10) as recited in claim 1, **characterized in that** the openings (42, 44) comprise either holes (42) or slots (44) for receiving the protrusions (46).

4. A rivetless nut plate (10) as recited in claim 1, **characterized in that** the shroud (12) includes a base portion (16), wherein the rivetless nut plate (10) further comprises a gasket (22) which is disposed in the base portion (16) of the shroud (12).

5. A rivetless nut plate (10) as recited in claim 4, **characterized in that** the gasket (22) is disposed generally between the base portion (16) of the shroud (12) and the retainer (30).

6. A rivetless nut plate (10) as recited in claim 5, **characterized in that** the gasket (22) includes a sealing lip (80) which contacts the shroud (12).

7. A rivetless nut plate (10) as recited in claim 4, **characterized in that** the gasket (22) is attached to the retainer (30).

8. A rivetless nut plate (10) as recited in claim 1, **characterized in that** the shroud (12) includes a base portion (16) having a rolled end (20), wherein the rolled end (20) generally retains the retainer (30) and the nut member (32) in the shroud (12).

9. A rivetless nut plate (10) as recited in claim 1, **characterized in that** the shroud (12) includes a base portion (16) having a rolled end (20), wherein the rolled end (20) generally retains the retainer (30) and the nut member (32) in the shroud (12), wherein the gasket (22) includes a sealing lip (80) which contacts the rolled end (20) of the shroud (12).

10. A rivetless nut plate (10) as recited in claim 4, **characterized in that** the shroud (12) includes a base portion (16) having a rolled end (20), wherein the rolled end (20) generally retains the retainer (30), the nut member (32) and the gasket (22) in the shroud (12).

11. A rivetless nut plate (10) as recited in claim 1, **characterized in that** the retainer (30) includes a tubular portion (52) which defines an opening (54), further comprising a mandrel (58) having a head portion (56) and a stem portion, wherein the head portion (56) of the mandrel (58) is generally retained in the retainer (30) such that the stem portion of the mandrel (58) extends out the opening (54) in the retainer (30), wherein the stem portion of the mandrel (58) is pullable such that the head portion (56) of the mandrel (58) moves through the opening (54) in the retainer (30), thereby expanding the tubular portion (52) of the retainer (30), wherein an external surface (60) of the tubular portion (52) of the retainer (30) includes either lobes or ribs (62) thereon for engaging a workpiece.

12. A rivetless nut plate (10) as recited in claim 1, **characterized in that** a surface (21) of the shroud (12) includes a circumferential rib (23) which is configured to stabilize the shroud (12) and provide for greater push out resistance of the nut member (32).
